# EUROPÄISCHE PATENTSCHRIFT

(11) **EP 0 540 505 B1**
(45) Veröffentlichungstag und Bekanntmachung des Hinweises auf die Patenterteilung: **13.07.1994**
(21) Anmeldenummer: 93101055.7
(22) Anmeldetag: 28.03.1991
(51) Int. Cl.: B65G 57/03

(54) **Einrichtung zum Abstapeln von aus aufgeteilten, plattenförmigen Einzelwerkstücken oder Plattenpaketen hergestellten Einzelformaten**
Installation for stacking of divided panel-like single work pieces or panel packets
Installation pour empiler des pièces à usiner partagées en forme de plaques individuelles ou en paquets

(30) Priorität: 23.04.1990 DE 4012840
(43) Veröffentlichungstag der Anmeldung: 05.05.1993
(62) Teilanmeldung aus: 91104950.0
(73) Patentinhaber: Jenkner, Erwin, D-71083 Herrenberg-Oberjesingen (DE)
(72) Erfinder: Jenkner, Erwin, D-71083 Herrenberg-Oberjesingen (DE)
(74) Vertreter: Becker, Maria, Dipl.-Phys.

(56) Entgegenhaltungen:
- AT-B- 377 495

## Beschreibung

Die Erfindung betrifft eine Einrichtung zum Abstapeln von aus aufgeteilten, plattenförmigen Einzelwerkstücken oder Plattenpaketen hergestellten Einzelformaten, mit den Merkmalen des Oberbegriffs von Patentanspruch 1.

Bei einer derartigen bekannten Einrichtung (AT-B-343 538) werden Einzelformate, die durch Aufteilen eines plattenförmigen Einzelwerkstücks oder von Plattenpaketen erhalten werden, über eine Rollenbahn einer Stapelstation zugeführt, die seitlich neben der Rollenbahn vorgesehen ist. Die Stapelstation umfasst einen Hubtisch, der von einem Abstapelwagen überfahrbar ist. Die Einzelformate werden jeweils in einem dem Hubtisch benachbarten Bereich der Rollenbahn mittels eines Anschlags gehalten, wo sie vom Abstapelwagen übernommen und auf dem Hubtisch abgelegt werden können.

Da die Einzelformate beim Transport entlang der Rollenbahn eine vorbestimmte Lage nicht immer exakt einhalten können, lassen sie sich auch im Übernahmebereich der Rollenbahn nicht immer in der gleichen Lage ausgerichtet anordnen. Damit wird das Aufstapeln der Einzelformate zu einem exakten Stapel praktisch unmöglich.

Bei einer anderen bekannten Einrichtung zum Verteilen und Stapeln von Zuschnitten bei Buntaufteilanlagen (AT-B-377 495) werden die von der Buntaufteilanlage kommenden Zuschnitte über eine Rollenbahn einer Winkelübergabeeinrichtung zugeführt, die es ermöglicht, die einzelnen Zuschnitte entweder einer manuellen Stapeleinrichtung oder einer aus Auflageplatte und Abstreifer gebildeten Stapeleinrichtung zuzuführen. Die automatisch arbeitende Stapeleinrichtung bildet dabei Plattenstapel aus relativ grossen Zuschnitten, während die kleinen Zuschnitte dem manuellen Stapelbereich zugeführt werden.

Der Erfindung liegt die Aufgabe zugrunde, eine weitere Einrichtung gemäss dem Oberbegriff von Patentanspruch 1 bereitzustellen; insbesondere soll eine exakte Stapelbildung in der oder den jeweiligen Stapelstationen ermöglicht werden.

Diese Aufgabe wird erfindungsgemäss durch die kennzeichnenden Merkmale des Patentanspruchs 1 gelöst.

In der erfindungsgemäss angeordneten Sammelstation lassen sich die angelieferten Einzelformate exakt ausrichten, so dass die nacheinander von der Transportvorrichtung übernommenen Einzelformate stets exakt dieselbe Stellung einnehmen, wodurch die Bildung genau ausgerichteter Einzelformatstapel ermöglicht wird.

Die erfindungsgemässe Einrichtung ist vorteilhaft mit einer eine Längs- und eine Quersäge aufweisenden Plattenaufteilanlage verkettet. In diesem Falle ist die der Sammelstation vorgeschaltete Fördereinrichtung als Vereinzelungsvorrichtung auszubilden, um die aneinander anliegenden Einzelformate anfallender, quer aufgeteilter Streifen eines Aufteilbildes vor ihrer Übergabe in die Sammelstation der erfindungsgemässen Einrichtung in Streifenlängsrichtung zu vereinzeln.

Im Falle schmaler Streifen können auch zwei oder ggf. mehrere Streifen eines Aufteilbildes nebeneinander liegend gleichzeitig vereinzelt werden, so dass dann jeweils zwei oder mehrere Einzelformate nebeneinanderliegend ausgerichtet werden können und einem Abstapelwagen der anschliessenden Transporteinrichtung zugeführt werden können. Demgemäss werden mehrere Einzelformate auch in den zur Stapelung ausgewählten Stapelstationen gemeinsam nebeneinanderliegend abgestapelt.

Ferner ist es möglich, in einer Stapelstation, sofern es sich um entsprechend klein bemessene Einzelformate handelt, auch zwei oder ggf. mehrere Einzelstapel verschiedener, gleichformatiger Einzelformate gleichzeitig zu bilden. Hierzu können die entsprechenden Einzelformate in der Sammelstation gesammelt und ausgerichtet werden.

Vorteilhafte Ausgestaltungen der Erfindung sind in den Unteransprüchen beschrieben.

In der Zeichnung ist, stark schematisiert, ein Ausführungsbeispiel der Erfindung dargestellt. Es zeigen:
- Fig. 1: eine Draufsicht der Einrichtung;
- Fig. 2: eine Ansicht der Einrichtung, in Richtung des Pfeiles A der Fig. 1 gesehen;
- Fig. 3: eine verkürzt dargestellte Draufsicht auf eine Einrichtung gemäss Fig. 1, deren Eingabestation eine mit einer Wartestation kombinierte Sammelstation vor- und eine Parkstation nachgeschaltet ist;
- Fig. 4: eine Draufsicht auf die Wartestation;
- Fig. 5: eine Ansicht der Sammel- und Wartestationen in Richtung des Pfeiles B der Fig. 4 gesehen;
- Fig. 6: einen Ausschnitt der Fig. 5, zur vollständigen Darstellung einer Seitenansicht der Wartestation.

Die Abstapeleinrichtung weist beispielsweise Stapelstationen I - VII auf. Vor der Stapelstation I ist eine Eingabestation 10 vorgeschaltet, der beispielsweise über eine Vereinzelungsvorrichtung 12 Einzelformate eines vereinzelten, quer aufgeteilten Plattenlängsstreifens zugeführt werden.

Jeder Stapelstation I - VII sowie der Eingabestation 10 ist eine Übernahmevorrichtung I′ - VII′ zugeordnet, die beispielsweise als Rollenförderer ausgebildet sind. Die Reihe der sich aneinander anschliessenden Stapelstationen I - VII erstreckt sich vorzugsweise senkrecht zur Förderrichtung der Vereinzelungsvorrichtung 12.

Jede Stapelstation I - VII ist mit einem Hubtisch 14 ausgestattet, der sich nach jeder erfolgten Übergabe eines Einzelformates oder eines Paketstapels 16 (Einzelformat eines Plattenpakets) um einen der Höhe dieser Teile entsprechenden Betrag absenkt, damit das jeweils oben liegende Einzelformat der abgelegten bzw. gebildeten Stapel sich in allen Stapelstationen I - VII in der gleichen Ebene zur Übernahme eines weiteren Einzelformates bzw. Paketstapels befindet.

Oberhalb der Stapelstationen I - VII ist eine Transportvorrichtung 18 angeordnet, mit deren Hilfe programmgesteuert in den einzelnen Stapelstationen I - VII abgestapelt wird. Sie weist eine Anzahl von Abstapelwagen 20 auf, die vorzugsweise um drei grösser ist als die Anzahl der Stapelstationen I-VII.

Die Abstapelwagen 20 bewegen sich in zwei übereinander liegenden Ebenen a-a sowie b-b längs der Reihe von Stapelstationen I - VII dergestalt, dass sie nach Passieren der letzten Stapelstation VII in einer Hubstation 22 aus ihrer Förderebene a-a in die Rücklaufebene b-b angehoben werden. Haben sie in dieser Ebene b-b die Eingabestation 10 passiert, laufen sie in eine weitere Hubstation 24 ein, in der sie, bevor sie wieder der Eingabestation 10 zugeführt werden, in die Förderebene a-a abgesenkt werden.

Jeder Stapelstation I - VII ist eine als Ganzes mit 26 bezeichnete Abstapelvorrichtung zugeordnet, die über ein mit dem Aufteilprogramm einer vorgeschalteten Plattenaufteilanlage abgestimmtes Steuerprogramm derart ansteuerbar ist, dass Einzelformate oder Paketstapel, die mittels eines Abstapelwagens 20 herangefördert werden, in der zu deren Stapelung vorgesehenen Stapelstation vom Abstapelwagen 20 heruntergeschoben werden. Zur Aufnahme von Einzelformaten oder Paketstapeln weist der Abstapelwagen 20 einen aus parallel voneinander verlaufenden Rechen-Zinken gebildeten Stapelrechen auf.

Jeder Abstapelwagen 20 ist mit einer eigenen Antriebsvorrichtung ausgestattet, die einen programmgesteuerten Elektromotor 54 aufweist.

Die den Abstapelwagen 20 in den Stapelstationen I - VII jeweils zugeordnete Abstapelvorrichtung 26 weist einen Abstreifkamm auf, dessen Kammzähne, wie durch den Doppelpfeil angedeutet, zwischen einer unteren Freigabestellung und einer oberen Abstreifstellung hin- und hersteuerbar sind. Die Betätigung des Abstreifkammes erfolgt mit Hilfe eines programmabhängig ansteuerbaren Stellgliedes beispielsweise in Form eines doppelt beaufschlagbaren Zylinders, dessen Kolbenstange gestellfest gelagert ist.

Die beschriebene Einrichtung arbeitet folgendermassen:

Es sei angenommen, dass die Einzelformate eines Aufteilbildes (nach einem Schnittplan aufgeteilte Werkstückplatte) in der Einrichtung so abgestapelt werden sollen, dass in deren Stapelstationen I - VII jeweils das gleiche Format aufweisende Einzelformate abgestapelt werden.

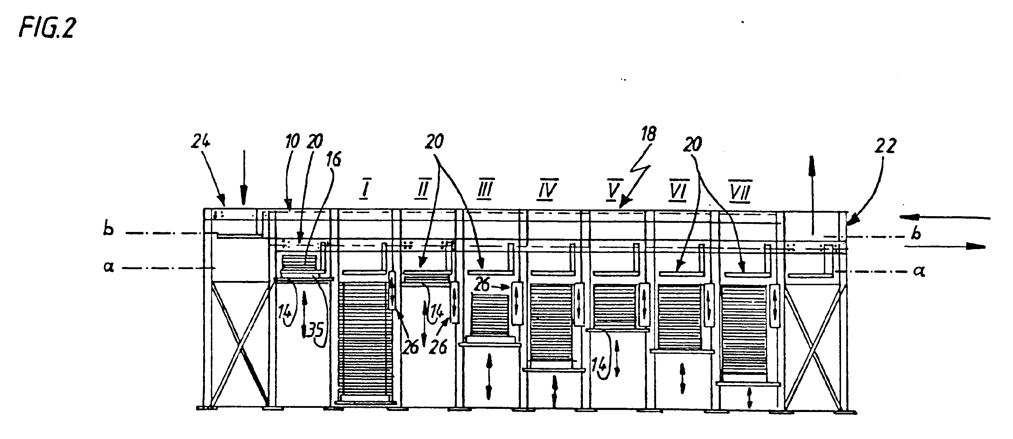

Wie Fig. 2 zeigt, sind beispielsweise sämtliche Stapelstationen I - VII belegt, was bedeutet, dass die betreffende Werkstückplatte in sieben Längsstreifen aufgeteilt worden ist, die ihrerseits zur Herstellung der Einzelformate entsprechend quer aufgeteilt worden sind.

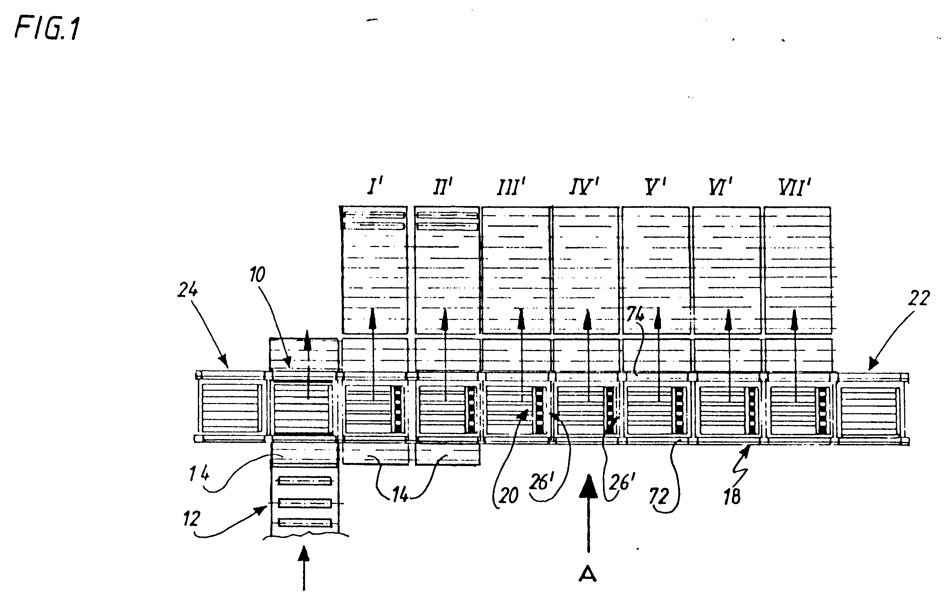

Das Aufteilbild verlässt die betreffende Plattenaufteilanlage so, dass einander benachbarte, quer aufgeteilte Längsstreifen aneinander anliegen. Voraussetzung zur gewünschten Abstapelung von Einzelformaten in jeweils der gleichen Stapelstation ist in diesem Falle, dass die Einzelformate jeweils eines Längsstreifens des Aufteilbildes einzeln der Eingabestation 10 zugeführt werden. Es ist aus diesem Grunde notwendig, zwischen die Eingabestation 10 und die Plattenaufteilanlage, wie bereits erwähnt, die Vereinzelungsvorrichtung 12 zwischenzuschalten (s. Fig. 1).

In der Eingabevorrichtung 10 ist bereits ein Abstapelwagen 20 bereitgestellt, auf den ein ankommendes Einzelformat durch Absenken abgelegt wird. Hierzu ist die Eingabestation 10 beispielsweise mit zwischen die Zinken des Abstapelwagens 20 eingreifenden und an deren Oberseite vorstehenden Friktionsrollen 35 ausgestattet, die abgesenkt werden, sobald sich das Einzelformat in Ablagestellung über den Zinken des Abstapelwagens 20 befindet. Nunmehr wird über ein Steuerprogramm die Antriebsvorrichtung dieses Abstapelwagens 20 angesteuert, der nunmehr kontinuierlich in der Förderebene a-a über die einzelnen Stapelstationen I - VII hinwegfährt. Die Abstapelvorrichtung 26 derjenigen Stapelstation, in welche das vom Abstapelwagen 20 aufgenommene Einzelformat abgestapelt werden soll, wird entsprechend dem Arbeitsprogramm vor Eintreffen des Abstapelwagens 20 in ihre Abstreifstellung nach oben gesteuert, wobei das Einzelformat gegen deren Abstreifkamm anläuft und aufgrund des weiterlaufenden Abstapelwagens 20 von diesem abgestreift und auf den Hubtisch 14 abgelegt wird.

Nach Einfahren des entleerten Abstapelwagens 20 in die Hubstation 22 tritt diese in Funktion, fördert den Abstapelwagen 20 in die Rücklaufebene b-b, wonach dessen Antriebsvorrichtung umgesteuert, der Abstapelwagen 20 somit in Richtung auf die Hubstation 24 zubewegt, in dieser wieder in die Förderebene a-a abgesenkt und anschliessend durch erneute Umsteuerung der Antriebsvorrichtung 52 in die Eingabestation transportiert und dort zur Übernahme eines weiteren Einzelformates bereitgestellt wird.

Nachdem vorzugsweise für sämtliche Stationen ein Abstapelwagen 20 vorgesehen ist, lassen sich Einzelformate oder Paketstapel kontinuierlich in der Eingabestation 10 einem Abstapelwagen 20 übergeben, wobei, entsprechend der Abfolge des Sägeprogramms der Plattenaufteilanlage, zum Einlagern der Einzelformate bzw. Paketstapel die Abstapelvorrichtungen 26 der verschiedenen Stapelstationen I - VII programmkonform angesteuert werden.

Wie aus Fig. 1 ersichtlich ist, sind die Hubtische 14 der Eingabestation 10 sowie der beiden folgenden Stapelstationen I und 11 grösser als die Hubtische 14 der übrigen Stapelstationen III - VII ausgebildet, so dass sie über die Vorderseite der Einrichtung hinausragen. Dies ist deshalb vorgesehen, damit in diesen beiden Stapelstationen I und II Einzelformate besonders grosser Länge günstig abstapelbar sind. Darüber hinaus ist es ohne weiteres möglich, gleichzeitig auch zwei oder ggf. drei Einzelformate bzw. Paketstapel einem Abstapelwagen 20 zuzuführen, sofern diese lediglich eine entsprechend geringe Abmessung senkrecht zur Förderrichtung aufweisen.

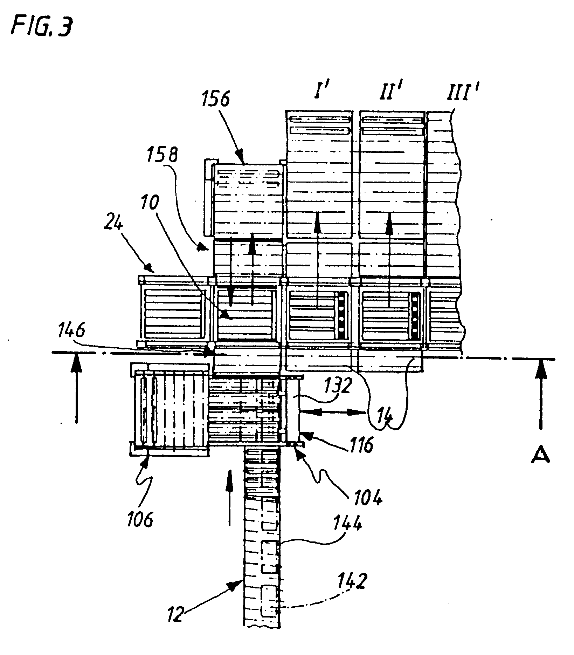

Bei der Einrichtung gemäss Fig. 3 ist zwischen Vereinzelungsvorrichtung 12 und Eingabestation 10 eine als Ganzes mit 104 bezeichnete Sammelstation zwischengeschaltet, der wiederum eine als Ganzes mit 106 bezeichnete Wartestation nachgeschaltet ist.

Mit Hilfe dieser Sammelstation 104 ist es möglich, einzelne Einzelformate bzw. Paketstapel vor dem Zuführen in die Eingabestation 10 exakt auszurichten. Ausserdem ist es möglich, Einzelformate bzw. Paketstapel, bevor diese der Eingabestation 10 zugeführt werden, in einer vorbestimmten Anzahl zu sammeln und dann in einem Arbeitsgang der Eingabestation 10 exakt ausgerichtet zuzuführen. Hierfür würde die Wartestation 106 noch nicht benötigt. Auf deren Anordnung könnte in diesem Falle also verzichtet werden. Auf den Zweck der Wartestation 106 wird deshalb zunächst noch nicht eingegangen.

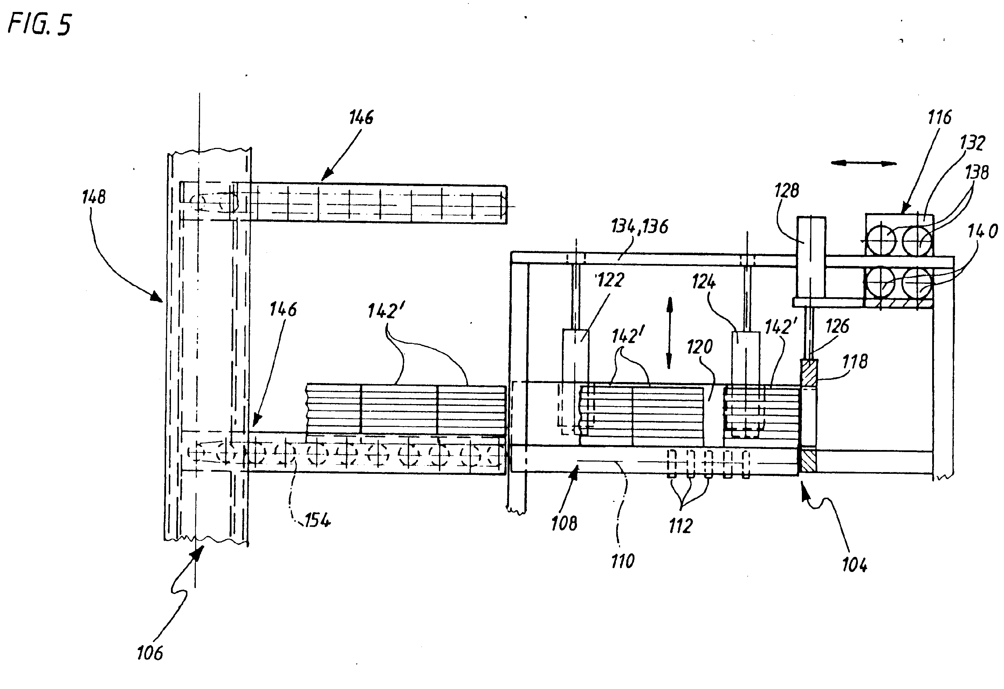

Wie Fig. 5 zeigt, weist die Sammelstation 104 einen Rollentisch 108 auf, dessen Rollen in quer zur Förderrichtung angeordnete Achsen 110 gelagerte Friktionsrollen 112 bilden.

Zwischen den einzelnen Reihen von Friktionsrollen 112 erstrecken sich Tragschienen 114 über die gesamte Tischbreite. Tragschienen 114 und Friktionsrollen 112 sind, was nicht mehr dargestellt ist, relativ zueinander vertikal verstellbar, derart, dass zum Auf- oder Herunterschieben von Einzelformaten bzw. Paketstapeln die Tragschienen sich unterhalb der durch die Friktionsrollen 112 definierten Auflageebene befinden. Vorzugsweise sind hierzu die Tragschienen 114 anheb- und absenkbar ausgebildet.

Dem Rollentisch 108 ist eine als Ganzes mit 116 bezeichnete Ausrichtvorrichtung zugeordnet, mit deren Hilfe Einzelformate bzw. Paketstapel exakt ausrichtbar sind, bevor sie der Eingabestation 10 zugeführt werden.

Die Ausrichtvorrichtung 116 weist hierzu einen sich in Förderrichtung über die gesamte Tischlänge erstreckenden Ausrichtanschlag 118 sowie einen sich hierzu senkrecht erstreckenden und auf der der Eingabestation zugewandten Seite angeordneten Förderanschlag 120 auf, der sich im wesentlichen über die gesamte Tischbreite erstreckt. Letzterer ist programmgesteuert nach oben und unten steuerbar. Hierzu dienen Hubvorrichtungen, beispielsweise pneumatische Hubzylinder 122 und 124, die aus der in Fig. 5 gezeigten Anschlagstellung nach oben in eine Freigabestellung steuerbar sind, um die auf dem Rollentisch 108 aufliegenden Teile in die Eingabestation 10 einlaufen lassen zu können. Der Ausrichtanschlag 118 ist an Kolbenstangen 126 von vorzugsweise pneumatischen Hubzylindern 128 und 130 aufgehängt, die ihrerseits auf einem Wagen 132 sitzen, der seinerseits auf zwei oberen, horizontalen Führungsschienen 134 und 136 verschiebbar geführt ist. Hierzu ist der Wagen 132 je Führungsschiene 134 bzw. 136 mit zwei Paaren von Führungsrollen 138 und 140 ausgestattet, von denen sich das eine Paar auf der Oberseite und das andere Paar auf der Unterseite der betreffenden Führungsschiene 134 bzw. 136 abwälzt.

Der Wagen 132 ist, was nicht dargestellt ist, mittels einer Antriebsvorrichtung programmgesteuert verstellbar, wozu beispielsweise zumindest die Führungsrollen 138 oder 140 mit einer Zahnstange in Eingriff sind.

Die Sammelvorrichtung 104 arbeitet ohne mit ihr verketteter Wartestation 106 folgendermassen:

Es sei angenommen, dass der Eingabestation 10 jeweils eine Vielzahl von Einzelformaten 142 exakt ausgerichtet zugeführt werden sollen. Dabei sei weiter angenommen, dass die Länge der Einzelformate 142 beispielsweise etwa der halben Länge des Rollentisches 108 entspricht, so dass jeweils zwei Einzelformate 142 in Förderrichtung hintereinanderliegend vom Rollentisch 108 aufgenommen werden können.

Zunächst sind hierzu Ausrichtanschlag 118 und Förderanschlag 120 in ihre in Fig. 5 gezeigte Anschlagstellung abzusenken. Ausserdem verbleiben die Tragschienen 114 in ihrer unteren Ausgangslage. Die Friktionsrollen 12′ der Vereinzelungsvorrichtung 12 sind, bezogen auf einen Seitenanschlag 144, derart schräg angestellt, dass einzeln angelieferte Einzelformate 142 bereits in Längsrichtung ausgerichtet auf den Rollentisch 108 gelangen.

Durch die Friktionsrollen 112 werden sie auf dem Rollentisch 108 so lange weitergefördert, bis das in Förderrichtung gesehen vordere Einzelformat 142 am Förderanschlag 120 zur Anlage kommt.

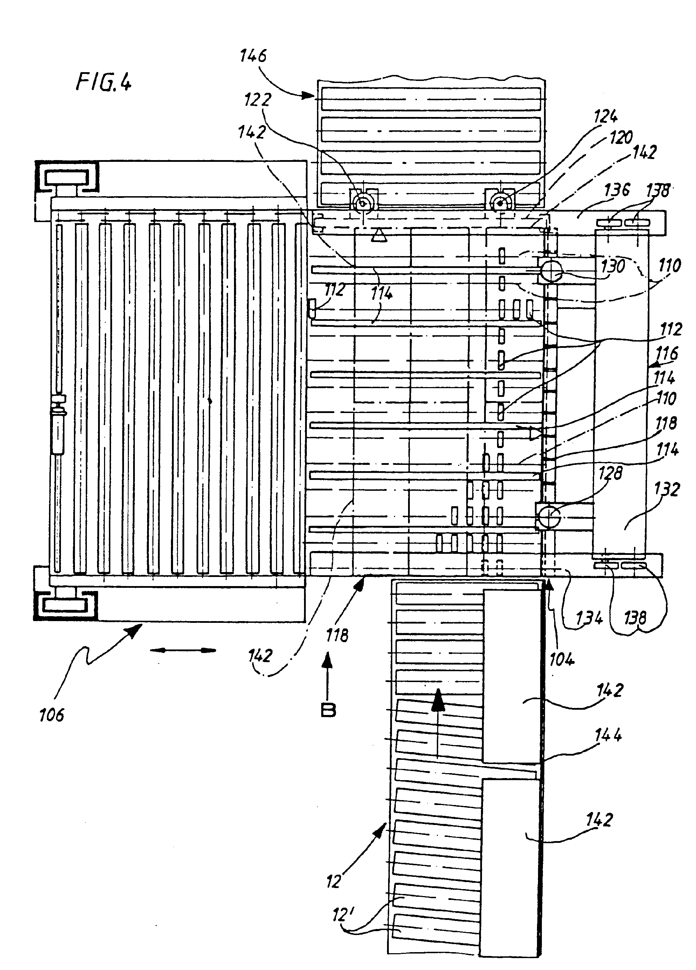

Danach werden die Tragschienen nach oben gesteuert und nehmen beide Einzelformate 142 gleichzeitig auf. Nunmehr tritt der Wagen 132 in Funktion und verschiebt über den Ausrichtanschlag 118 beide Einzelformate 142 parallel zu sich selbst in Richtung auf die Wartestation 106 um eine Strecke, die geringfügig grösser ist als die Breite der Einzelformate 142. Danach fährt der Wagen 132 in seine in Fig. 4 gezeigte Ausgangsstellung zurück, die Tragschienen 114 werden abgesenkt und ein weiteres Paar von Einzelformaten 142 wird auf den Rollentisch 108 gefördert. Daraufhin vollzieht sich der vorbeschriebene Arbeitszyklus von Ausrichtanschlag 118 und Tragschienen 114 von neuem, bis beispielsweise drei Paare von Einzelformaten 142 vom Rollentisch 108 aufgenommen sind, wobei nach Aufnahme der beiden zuletzt angelieferten Einzelformate 142 die Tragschienen 114 in ihrer oberen Stellung verbleiben, der Ausrichtanschlag 118 in seine obere Ausgangsstellung angehoben und der Wagen 132 um eine solche Strecke in Richtung auf die Wartestation 106 gesteuert wird, dass der Ausrichtanschlag 118 danach hinter den beiden zuerst angelieferten, bzw. der Wartestation 106 benachbarten Einzelformaten 142 abgesenkt werden kann.

Anschliessend wird der Wagen 132 in die entgegengesetzte Richtung umgesteuert, wobei über den Ausrichtanschlag 118 die vorhandenen Paare von Einzelformaten 142 bzw., wie aus Fig. 5 ersichtlich ist, entsprechende Paare von Paketstapeln 142′ exakt aneinanderliegend in eine Übergabeposition geschoben werden.

Nach Absenken der Tragschienen 114 und Anheben des Förderanschlages 120 treten dann die Friktionsrollen 112 in Funktion und führen die Einzelformate 142 bzw. Paketstapel 142′ gemeinsam über einen Zwischenrollentisch 146 der Eingabestation 10 zu, aus der sie gemeinsam zu einer programmgemäss ausgewählten Stapelstation I - VII abtransportiert werden.

Die Wartestation 106 erfüllt folgende Aufgabe:

In der Regel enthält ein hinter einer Plattenaufteilanlage anfallendes Aufteilbild eine Anzahl von Einzelformaten 142 bzw. Paketstapeln 142′, z.B. 6 Stück, die beispielsweise jeweils zur Hälfte auf dem Rollentisch 108 ausgerichtet werden können. In diesem Falle wird die Wartestation 106 nicht benötigt.

Es können aber auch Aufteilbilder anfallen, die insgesamt beispielsweise sieben oder mehr Einzelformate 142 bzw. Paketstapel 142′ enthalten können. In diesem Falle verbleibt also je Aufteilbild z.B. ein Einzelformat 142 bzw. Paketstapel 142′, das bzw. der nicht mehr mit anderen auf dem Rollentisch 108 unterzubringen bzw. gemeinsam mit diesen der Eingabestation 10 zuzuführen ist.

Solche überzähligen Einzelformate 142 bzw. Paketstapel 142′ lassen sich dann mit Hilfe des Ausrichtanschlages 118 der Wartestation 106 zuführen, in der jeweils so viele angesammelt werden können, wie für eine Komplettbeschickung der Eingabestation 10 benötigt werden. Hierzu könnte bereits eine Sammelebene in der Wartestation 106 genügen.

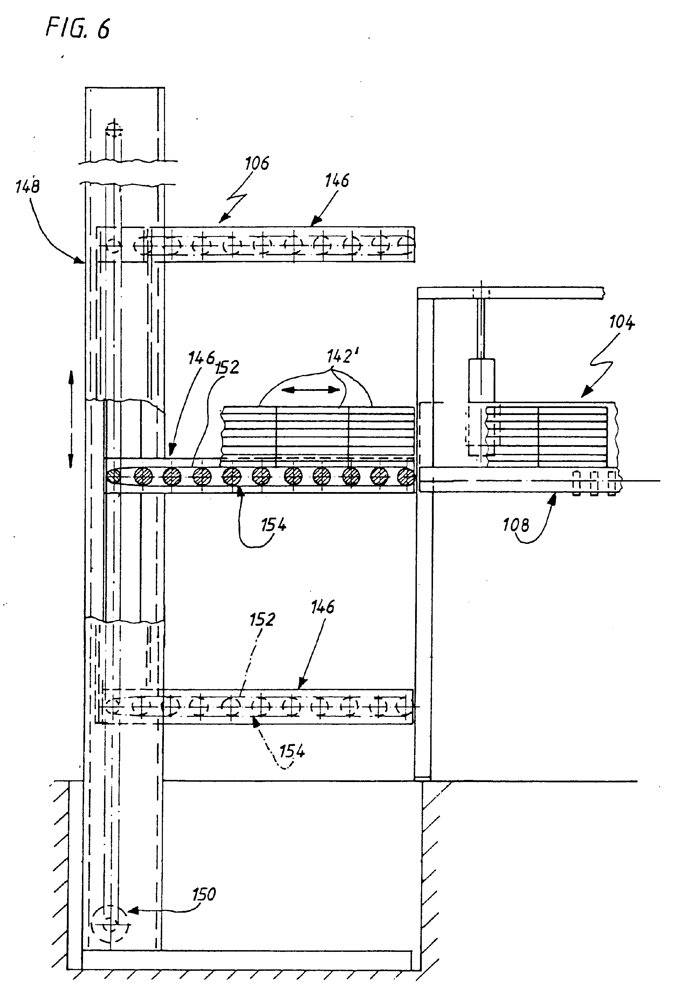

Damit jedoch eine zügige Zuführung solcher zwischengespeicherter, überzähliger Einzelformate 142 bzw. Paketstapel 142′ nach der Aufteilung einer vorgesehenen Anzahl von Werkstückplatten auf einer Plattenaufteilanlage und Abstapelung der Einzelformate 142 bzw. Paketstapel 142′ von aus diesen Werkstückplatten gefertigten Aufteilbildern erfolgen kann, ist die Wartestation 106 mit mehreren, übereinander angeordneten Speicherebenen ausgestattet (Fig 6), die sich auf Hebebühnen 146 befinden.

Im vorliegenden Falle handelt es sich beispielsweise um drei solcher Hebebühnen 146, die in einem Führungsgestell 148 mittels einer Antriebsvorrichtung 150 gemeinsam höhenverstellbar und einzeln in die Ebene des Rollentisches 108 der Sammelstation 104 einstellbar sind.

Die Speicherebene dieser Hebebühne 146 ist vorzugsweise jeweils durch das obere Trum 152 eines endlosen, horizontalen Bandförderers 154 gebildet, dessen Antrieb in beiden Richtungen programmgesteuert erfolgt.

Es ist klar, dass die Aufnahmekapazität dieser Hebebühnen 146 zumindest derjenigen des Rollentisches 108 entspricht. Dabei ist selbstverständlich auch eine andere Auslegung der Hebebühnen 146 sowie der Wartestation 148 denkbar.

Wie die Fig. 3 zeigt, kann der Eingabestation 10 der Stapeleinrichtung gegenüber der Sammelstation 104 noch eine Parkstation 156 zugeordnet sein. Ihr fällt die Aufgabe zu, Einzelformate 142 bzw. Paketstapel 142′ einzeln, oder durch die die Sammelstation 104 zusammengestellt, also gleichzeitig mehrere hiervon, zu speichern, für den Fall, dass die programmgemäss zu deren Abstapelung auszuwählende Stapelstation nicht aufnahmefähig sein bzw. gerade entleert werden sollte.

Es kann somit trotz eines momentanen Ausfalls einer oder ggf. mehrerer Stapelstationen der kontinuierliche Betrieb der Abstapeleinrichtung weitergeführt werden.

Die Konstruktion der Parkstation 156 entspricht zweckmässigerweise derjenigen der erläuterten Wartestation 106, wobei gleichfalls zwischen Eingabestation 10 und Parkstation 156 noch ein Friktionsrollen aufweisender Zwischentisch 158 vorgesehen sein kann.

Sammelstation 104, Wartestation 106 und Parkstation 156 werden auch für sich allein als schutzwürdig betrachtet.

## Patentansprüche

1. Einrichtung zum Abstapeln von aus aufgeteilten, plattenförmigen Einzelwerkstücken oder Plattenpaketen hergestellten Einzelformaten (142, 142′), mit einem Stapelbereich (I, II, ..., VII), mit einer oberhalb des Stapelbereiches (I, II, ..., VII) angeordneten Transportvorrichtung (18), die einen Abstapelwagen (20) zum Ablegen ihm übergebener Einzelformate (142, 142′) in den Stapelbereich (I, II, ... oder VII) aufweist, mit einer dem Abstapelwagen (20) zugeordneten Abstapelvorrichtung (26) zum Ablegen der Einzelformate in dem Stapelbereich (I, II, ..., VII), und mit einer bezogen auf den Transportweg der Einzelformate (142, 142′) vor dem Stapelbereich (I, II, ..., VII) vorgesehenen Fördereinrichtung (12) zum Zuführen von Einzelformaten (142, 142′),
**dadurch** **gekennzeichnet**,
dass zwischen der Fördereinrichtung (12) und der dem Stapelbereich zugeordneten Transportvorrichtung (18) eine Sammelstation (104) zum Sammeln von Einzelformaten (142) in der Ebene eines Sammeltisches (108) zwischengeschaltet ist, in der wenigstens ein angeliefertes Einzelformat (142) mittels einer Ausrichtvorrichtung (116) auf dem Sammeltisch (108) in eine vorbestimmte Eingabeposition ausrichtbar ist.

2. Einrichtung nach Anspruch 1, dadurch gekennzeichnet, dass am Beginn des mehrere Stapelstationen (I, II, .., VII) aufweisenden Stapelbereiches eine mit der Transportvorrichtung (18) zusammenwirkende Eingabestation (10) angeordnet ist, die an die Sammelstation (104) anschliesst, wobei die Sammelstation als Sammeltisch einen Rollentisch (108) umfasst, der zumindest die Breite der Eingabestation (10) aufweist, und wobei insbesondere eine Vereinzelungsvorrichtung (12) als Fördereinrichtung vorgesehen ist, mittels der die Einzelformate (142) der Sammelstation (104) übergebbar sind.

3. Einrichtung nach Anspruch 2, dadurch gekennzeichnet, dass der Sammeltisch als Rollentisch (108) mit einer Vielzahl von reihenweise vorgesehenen Friktionssrollen (112) ausgebildet ist, deren Achsen (110) sich quer zur Förderrichtung erstrecken, und dass zwischen den Rollenreihen sich in Richtung der Rollenachsen (110) erstreckende Tragschienen (114) angeordnet sind, wobei die Friktionsrollen (112) und die Tragschienen (114) relativ zueinander vertikal verstellbar sind und wobei vorzugsweise die Tragschienen (114) in einer Ebene oberhalb der Friktionsrollen (112) anhebbar oder unter diese absenkbar sind.

4. Einrichtung nach Anspruch 2 oder 3, dadurch gekennzeichnet, dass die oberhalb des Rollentisches (108) angeordnete Ausrichtvorrichtung (116) mindestens zwei zueinander senkrecht angeordnete, anheb- und absenkbare Anschläge aufweist, von denen der eine als Ausrichtanschlag (118) sich in Förderrichtung im wesentlichen über die gesamte Tischlänge erund der andere als Förderanschlag (120) die Einschubstrecke in die Sammelstation (104) begrenzt und dass der sich in Förderrichtung erstreckende Ausrichtanschlag (118) quer zur Förderrichtung verfahrbar ist.

5. Einrichtung nach Anspruch 4, dadurch gekennzeichnet, dass mit Hilfe des quer zur Förderrichtung verfahrbaren Ausrichtanschlages (118) auf dem Rollentisch (108) nacheinander auflaufende Einzelformate (142) nach deren Ablegen auf den Tragschienen (114) als ihre Anlieferstellung bei gleichzeitigem Ausrichten in eine Sammelposition verschiebbar sind und dass nach dem Sammeln einer vorbestimmten Anzahl von Einzelformaten (142) auf dem Rollentisch (108) diese mittels des Ausrichtanschlages (118) wieder in die entgegengesetzte Richtung in eine Übergabeposition vor die Eingabestation (10) verschiebbar sind, wonach die Einzelformate (142) wieder von den Friktionsrollen (112) des Rollentisches (108) aufgenommen und in die Eingabestation (10) gefördert werden.

6. Einrichtung nach einem der vorhergehenden Ansprüche 1 bis 5, dadurch gekennzeichnet, dass der Sammelstation (104) seitlich eine Wartestation (106) zugeordnet ist, in die Einzelformate (142) oder wenigstens eine zuvor auf dem Rollentisch (108) zusammengestellte Formation hiervon einspeicherbar ist, wobei vorzugsweise die Einzelformate (142) oder wenigstens eine Formation hiervon mittels des Ausrichtanschlages (118) der Wartestation (106) zuführbar sind.

7. Einrichtung nach Anspruch 6, dadurch gekennzeichnet, dass die Wartestation (106) wenigstens eine sich an den Rollentisch (108), dem Ausrichtanschlag (118) gegenüberliegend, anschliessende Speicherebene (146) aufweist, der Fördermittel zugeordnet sind zur Übernahme von Einzelformaten (142) oder einer Formation hiervon vom Rollentisch (108) oder zur Übergabe auf diesen, wobei die Wartestation vorzugsweise eine Vielzahl von übereinander angeordneten Speicherebenen (146) umfasst, die in ihrer jeweiligen Übernahme- und Übergabestellung mit dem Rollentisch (108) auf gleicher Höhe sind, und wobei insbesondere die Speicherebenen durch übereinander angeordnete Hebebühnen (146) definiert sind, die relativ zum Rollentisch (108) aus ihrer Übernahme- bzw. Übergabeposition in vertikaler Richtung verstellbar sind.

8. Einrichtung nach Anspruch 7, dadurch gekennzeichnet, dass die wenigstens eine Speicherebene durch das obere Trum (152) eines endlosen Bandförderers (154) gebildet ist.

9. Einrichtung nach einem der vorhergehenden Ansprüche, dadurch gekennzeichnet, dass der Transportvorrichtung (18) eine Parkstation (156) zugeordnet ist, die zur Übernahme von Einzelformaten (142) oder einer Formation hiervon dient, welche einer zur Aufnahme derselben bestimmten, jedoch noch belegten bzw. gerade zu entleerenden Stapelstation (I, II, ..., VII) zuzuführen sind.

10. Einrichtung nach Anspruch 9, dadurch gekennzeichnet, dass die Parkstation (156) der Sammelstation (104) gegenüberliegend der mit der Transportvorrichtung (18) zusammenwirkenden Eingabestation (10) zugeordnet ist, wobei die Parkstation (156) eine Vielzahl von übereinander angeordneten Speicherebenen aufweist, die zur Übernahme bzw. Übergabe in die Aufnahmeebene der Eingabestation (10) einstellbar sind.

## Claims

1. Installation for stacking of divided panel-like single work pieces (142, 142′) or panel packets having a stacking area (I, II, ..., VII), a transfer unit (18) arranged above the stacking area (I, II, ..., VII) and comprising a stacking carriage (20) for depositing single work pieces (142, 142′), that have been delivered to it, in the stacking area (I, II, ..., VII), having further a stacking device (26) assigned to the stacking carriage (20) for depositing the single work pieces in the stacking area (I, II, ..., VII) and conveyor means (12) for feeding single work pieces (142, 142′), arranged upstream of the stacking area (I, II, ..., VII), related to the transfer path of the single work pieces (142, 142′),
**characterized** **in** **that**
a collecting station (104) for collecting single work pieces (142) is interposed between the conveyor means (12) and the transfer unit (18) assigned to the stacking area, at the level of a collecting table (108) at which at least one single work piece (142) can be aligned to a predetermined infeed position on the collecting table (108) by means of an aligning device (116).

2. Installation according to claim 1, characterized in that there are provided, at the beginning of the stacking area which comprises a plurality of stacking stations (I, II, .., VII), following the collecting station (104), an infeed station (10) cooperating with the transfer unit (18), the collecting station comprising a collecting table in the form of a roller table (108) having at least the same width as the infeed station (10), and the arrangement comprising in particular a separating unit (12) as conveyor device by means of which single work pieces (142) can be delivered to the collecting station (104).

3. Installation according to claim 2, characterized in that the collecting table is designed as roller table (108) having a plurality of friction rollers (112) arranged in rows, with the axes (110) extending transversely to the conveying direction, and that carrying rails (114) extend between the rows of rollers, in the direction of the roller axes (110), the friction rollers (112) and the carrying rails (114) being vertically adjustable relative one to the other, and the carrying rails (114), preferably, being mounted in such a way that they can be lifted to a level above, or lowered to a level below, the friction rollers (112).

4. Installation according to claim 2 or 3, characterized in that the aligning unit (116) provided above the roller table (108) comprises at least two liftable and lowerable stops arranged vertically relative to each other, one of the said stops serving as an aligning stop (118) and extending over the full table length, in the conveying direction, the other one serving as conveying stop (120) and limiting the length of infeed into the collecting station (104), and that the aligning stop (118) extending in the conveying direction can be displaced transversely to the conveying direction.

5. Installation according to claim 4, characterized in that once the single work pieces (142) arriving successively on the roller table (108) have been deposited on the carrying rails (114), in their delivery position, they can be transferred by means of the aligning stop (118), that can be displaced transversely to the conveying direction, into a collecting position, while being simultaneously aligned, and that when a predetermined number of single work pieces (142) has been collected on the roller table (108), these can be re-transferred in opposite direction, by means of the aligning stop (118), into a transfer position in front of the infeed station (10), whereupon the single work pieces (142) are once more engaged by the friction rollers (112) of the roller table (108) and conveyed to the infeed station (10).

6. Installation according to any of the preceding claims 1 to 5, characterized in that the collecting station (104) has assigned to it a laterally arranged waiting station (106) in which the single work pieces (142), or at least a group of them previously assembled on the roller table (108) can be stored, and that preferably the single work pieces, or at least an assembled group thereof, can be fed to the waiting station (106) by means of the aligning stop (118).

7. Installation according to claim 6, characterized in that the waiting station (106) comprises at least one storage level (146), arranged immediately downstream of the roller table (108) and opposite the aligning stop (118), with cooperating conveyor means for taking over from, or delivering to the roller table (108) single work pieces (142) or assembled groups thereof, the waiting station preferably comprising a plurality of superimposed storage levels (146) which in their receiving or transfer position occupy the same level as the roller table (108), the storage levels being specifically defined by lifting platforms (146) that can be vertically displaced from their receiving or transfer position relative to the roller table (108).

8. Installation according to claim 7, characterized in that the at least one storage level is formed by the upper strand (152) of an endless belt conveyor (154).

9. Installation according to any of the preceding claims, characterized in that the transfer unit (18) has assigned to it a parking station (156) serving to take over single work pieces (142) or assembled groups thereof, that are intended to be supplied to a stacking station (I, II, ..., VII) that is still occupied or just being emptied.

10. Installation according to claim 9, characterized in that the parking station (156), being arranged opposite the collecting station (104), coacts with the infeed station (10) that cooperates with the transfer unit (18), the parking station (156) comprising a plurality of superimposed storage levels that can be adjusted to the infeed level of the infeed station (10), for delivery or transfer.

## Revendications

1. Dispositif d'empilage de formats individuels (142, 142′), réalisé par délignage dans des pièces individuelles en forme de plaques ou dans des paquets de plaques, comportant une zone d'empilage (I, II, ..., VII), un dispositif de transport (18) disposé au dessus de la zone d'empilage (I, II, ..., VII) qui présente un chariot d'empilage (20) pour le dépôt des formats individuels (142, 142′) qui lui ont été transmis dans la zone d'empilage (I, II, ... ou VII), un dispositif d'empilage (26) associé au chariot (20) pour le dépôt des formats individuels dans la zone d'empilage (I, II, ..., VII), et un dispositif convoyeur (12), prévu, par rapport à la voie de transport de formats individuels (142, 142′), en amont de la zone d'empilage (I, II, ..., VII), pour l'amenée de formats individuels (142, 142′), caractérisé en ce que, entre le dispositif convoyeur (12) et le dispositif de transport (18) associés à la zone d'empilage, est intercalé un poste d'accumulation (104) pour l'accumulation de formats individuels (142) dans le plan d'une table (108), poste dans lequel au moins un format individuel amené (142) peut être aligné dans une position d'introduction prédéterminée sur la table (108) au moyen d'un dispositif d'alignement (116).

2. Dispositif selon la revendication 1, caractérisé en ce que, au début de la zone d'empilage, présentant plusieurs postes d'empilage (I, II, ..., VII), est disposé un poste d'introduction (10) coopérant avec le dispositif de transport (18), poste (10) qui est raccordé au poste d'accumulation (104), ledit poste d'accumulation comprenant, pour servir de table d'accumulation, une table à rouleaux (108) dont la largeur est au moins égale au poste d'introduction (10), avec notamment la présence d'un dispositif d'individualisation (12) servant de dispositif convoyeur au moyen duquel les formats individuels (142) peuvent être transférés au poste d'accumulation (104).

3. Dispositif selon la revendication 2, caractérisé en ce que la table d'accumulation est réalisée sous forme d'une table à rouleaux (108) comportant une pluralité de rouleaux à friction (112) prévus en rangée, dont les axes (110) s'étendent transversalement à la direction du transport, et en ce que entre les rangées de rouleaux sont disposés des rails porteurs (114) s'étendant en direction des axes (110) des rouleaux, lesdits rouleaux à friction (112) et lesdits rails porteurs (114) étant réglables verticalement les uns par rapport aux autres et, de préférence, les rails porteurs (114) pouvant être soulevés dans un plan supérieur aux rouleaux de friction (112) ou être abaissés dans un plan inférieur à ces rouleaux.

4. Dispositif selon la revendication 2 ou 3, caractérisé en ce que le dispositif d'alignement (116) disposé au-dessus de la table à rouleaux (108) présente au moins deux butées pouvant être soulevées et abaissées, disposées perpendiculairement l'une à l'autre, dont l'une, servant de butée d'alignement (118), s'étend en direction du transport sensiblement sur la longueur totale de la table et dont l'autre, servant de butée de transport (120), délimite le trajet d'introduction dans le poste d'accumulation (104) et en ce que la butée d'alignement (118) s'étendant dans le sens du transport est mobile transversalement à ce sens.

5. Dispositif selon la revendication 4, caractérisé en ce que, à l'aide de la butée (118) mobile transversalement au sens du transport sur la table à rouleaux (108), il est possible de déplacer, vers une position d'accumulation avec alignement simultané, des formats individuels (142) arrivant successivement après leur dépôt sur les rails porteurs (114) où ils se trouvent dans leur position d'apport initial, et que, après l'accumulation d'un nombre prédéterminé de formats individuels (142) sur la table à rouleaux (108), ceux-ci peuvent être redéplacés, au moyen de la butée d'alignement (118), dans la direction opposée vers une position de transfert en amont du poste d'insertion (10), lesdits formats individuels (142) étant repris par les rouleaux à friction (112) de la table à rouleaux (108) et transportés vers le poste d'introduction (10).

6. Dispositif selon l'une des revendications précédentes 1 à 5, caractérisé en ce que, au poste d'accumulation (104) est associé latéralement un poste d'attente (106) dans lequel peuvent être stockés des formats individuels (142) ou au moins une formation de tels formats rassemblés précédemment sur la table à rouleaux (108), tandis que de préférence, lesdits formats individuels (142), ou au moins une formation de ceux-ci, peuvent être amenés au moyen de la butée d'alignement (118) vers le poste d'attente (106).

7. Dispositif selon la revendication 6, caractérisé en ce que le poste d'attente (106) présente au moins un plan de stockage (146) faisant suite à la table à rouleaux (108) et opposé à la butée d'alignement (118), plan (146) auquel sont associés des moyens de transport pour la reprise de la table à rouleaux (108) ou de la remise sur celle-ci de formats individuels (142) ou d'une formation de tels formats, ledit poste d'attente comprenant, de préférence, une pluralité de plans de stockage (146) superposés lesquels sont au même niveau que la table à rouleaux (108) dans leurs positions respectives de reprise et de remise, et tandis que, notamment, les plans de stockage sont définis par des plates-formes de levage (146) superposées, dont les positions sont réglables verticalement par rapport à la table à rouleaux (108) pour passer de la position de reprise à la position de remise.

8. Dispositif selon la revendication 7, caractérisé en ce que le plan de stockage est formé par le brin supérieur (152) d'un convoyeur à bande sans fin (154).

9. Dispositif selon l'une des revendications précédentes, caractérisé en ce que, au dispositif de transport (18) est associé un poste parking (156) qui sert à la reprise de formats individuels (142) ou d'une formation de ceux-ci, formats qui doivent être amenés vers un poste d'empilage (I, II, ..., VII) auquel ces formats sont destinés, mais qui est encore occupé ou en cours d'évacuation.

10. Dispositif selon la revendication 9, caractérisé en ce que le poste parking (156), qui fait face au poste d'accumulation (104) est associé au poste d'introduction (10) coopérant avec le dispositif de transport (18), ledit poste parking (156) présentant une pluralité de plans d'accumulation superposés qui sont réglables pour assurer la reprise ou la remise dans le plan de réception du poste d'introduction (10).
